(19) Europäisches Patentamt
European Patent Office
Office européen des brevets

(11) EP 0 720 989 B1

(12) **FASCICULE DE BREVET EUROPEEN**

(45) Date de publication et mention de la délivrance du brevet:
**01.09.1999 Bulletin 1999/35**

(51) Int Cl.$^6$: **C08F 10/00**, C08F 4/646

(21) Numéro de dépôt: **95402974.0**

(22) Date de dépôt: **29.12.1995**

(54) **Procédé continu de (co)polymérisation de l'éthylène**

Kontinuierliches Verfahren zur (Co)Polymerisation von Ethylen

Continuous process for the (co)polymerization of ethylene

(84) Etats contractants désignés:
**AT BE DE DK ES GB GR IE IT NL PT SE**
Etats d'extension désignés:
**SI**

(30) Priorité: **30.12.1994 FR 9415929**

(43) Date de publication de la demande:
**10.07.1996 Bulletin 1996/28**

(73) Titulaire: **Enichem S.p.A.**
**20097 S. Donato Milanese (Milano) (IT)**

(72) Inventeurs:
- **Bujadoux, Karel**
  **F-62300 Lens (FR)**
- **Leprevost, Benoit**
  **F-62700 Bruay-la-Buissiere (FR)**
- **Olonde, Xavier**
  **F-59960 Neuville en Ferrain (FR)**
- **Adisson, Emmanuel**
  **62510 Arques (FR)**
- **Agbossou, Sénamé**
  **F-62820 Libercourt (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**EP-A- 0 283 958**
**EP-A- 0 436 328**
**US-A- 4 659 685**

EP 0 720 989 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

La présente invention concerne un procédé continu pour l'homopolymérisation de l'éthylène et la copolymérisation de l'éthylène et des alpha-oléfines.

Il est connu de (co)polymériser l'éthylène dans de larges gammes de températures et de pressions au moyen de catalyseurs et systèmes catalytiques contenant des dérivés de métaux de transition et des dérivés organométalliques. Ces systèmes catalytiques dits ZIEGLER-NATTA ou ZIEGLER ont été sans cesse améliorés de façon à augmenter leur activité. Ainsi les résidus catalytiques ne subsistent plus dans le polymère qu'à l'état de traces qu'il serait anti-économique de vouloir éliminer par un traitement.

Il est également connu de (co)polymériser l'éthylène en présence de systèmes catalyseurs métallocène/aluminoxane. Le premier système catalytique très actif de ce type qui a été découvert est celui à base de zirconocène : $Cp_2ZrCl_2$/aluminoxane, avec un rapport Al/Zr compris entre 1000 et 10000. Les systèmes catalyseurs métallocène/aluminoxane sont solubles dans le milieu de polymérisation, ce qui est un avantage par comparaison avec $ZrCl_4$. Le développement des recherches dans ce domaine a conduit à découvrir d'autres catalyseurs métallocènes, comme les métallocènes pontés lesquels sont capables de conduire, dans le cas de la copolymérisation de l'éthylène avec les alpha-oléfines, à une meilleure homogénéité de répartition des comonomères dans les chaînes moléculaires.

D'une manière générale, les catalyseurs métallocènes permettent d'obtenir des rendements catalytiques extrêmement élevés. Cependant, ils présentent l'inconvénient de conduire à des (co)polymères ayant une distribution des masses moléculaires (D.M.M.) très étroite, (co)polymères qui, s'ils sont intéressants sur le plan physico-chimie, conduisent à des difficultés au moment de leur mise en oeuvre, l'énergie consommée par les extrudeuses étant beaucoup plus élevée que lors de la mise en oeuvre d'un (co)polymère à distribution plus large.

Il était donc tentant de mettre en oeuvre des compositions catalytiques comprenant les deux types de catalyseurs précités, ZIEGLER et métallocènes, en espérant obtenir une D.M.M. moins étroite que celle obtenue avec les métallocènes seuls tout en conservant un rendement catalytique très élevé.

Les recherches effectuées par la Société déposante ont montré qu'en utilisant simultanément mais séparément ces deux types de catalyseurs, il était possible non seulement d'élargir effectivement la D.M.M. par rapport aux métallocènes seuls, le rendement catalytique demeurant acceptable bien que diminué, mais encore d'obtenir un effet de synergie inattendu et surprenant résidant dans l'obtention de (co)polymères possédant un indice de fluidité inférieur à celui de (co)polymères obtenus séparément, d'une part, à l'aide des catalyseurs ZIEGLER classiques, et, d'autre part, à l'aide des métallocènes utilisés seuls.

La présente invention a donc pour objet un procédé continu pour l'homopolymérisation de l'éthylène et la copolymérisation de l'éthylène avec au moins une alpha-oléfine, à une température comprise entre 160 et 300°C, sous une pression comprise entre 400 et 3000 bars, dans au moins un réacteur comprenant au moins une zone réactionnelle dans lequel le temps de séjour des catalyseurs est compris entre 1 et 150 secondes, caractérisé en ce qu'il consiste à introduire simultanément mais séparément dans le réacteur, d'une part, au moins un système catalytique de type ZIEGLER et, d'autre part, au moins un système catalytique de type métallocène/aluminoxane.

Les alpha-oléfines pouvant être copolymérisées avec l'éthylène selon ce procédé sont notamment celles ayant de 3 à 12 atomes de carbone, telles que le propylène, le butène-1, le méthyl-4 pentène-1, l'hexène-1 et l'octène-1.

Les systèmes catalytiques de type ZIEGLER mis en oeuvre dans la présente invention sont des systèmes bien connus de l'homme du métier. Ils comprennent, d'une part, au moins un composé de métal de transition des groupes IVB, VB, VIB et VIII de la Classification Périodique constituant le catalyseur proprement dit, et, d'autre part, au moins un composé organo-métallique (notamment organo-aluminique) comme activateur.

Les catalyseurs ZIEGLER incluent notamment, mais non exclusivement, ceux décrits dans les brevets EP-A-032 339, EP-A-0 053 956, US-A-4 396 532, FR-A-2 342 306, FR-A-2 400 040, EP-A-0 070 749, EP-A-0 072 717, EP-A-0 187 796, EP-A-0 3 51 265, EP-A-0 351 266, EP-A-0 515 645, EP-A-0 572 647 et EP-A-0 523 785. Des catalyseurs ZIEGLER typiques sont constitués par les halogénures de titane et les alcoxyhalogénures de titane.

L'activateur du système ZIEGLER est avantageusement choisi parmi les trialkylaluminiums $AlR_3$, les halogénodialkylaluminiums dialkylaluminiums comme $Al(C_2H_5)_2Cl$, les comme $AlC_2H_5Cl_2$, les sesquihalogénures d'alkylaluminium, les tétralkylaluminoxanes RR'Al-O-AlR"R'", les monoalkylsilanolatodialkylaluminiums $RH_2$Si-O-AlR'R", les dialkylsilanolatodialkylaluminiums RHR'Si-O-AlR"R'", les pentalkylsiloxalanes RR'R"Si-O-AlR'"R"" tels que le diméthyléthyldiéthylsiloxalane, les alcoxydialkylaluminiums R-O-AlR'R" tels que l'éthoxydiéthylaluminium, les dialcoxyalkylaluminiums RO(R'O)AlR", et leurs mélanges, les radicaux alkyles R, R', et R"", R", R'" identiques ou différents, ayant de 1 à 12 atomes de carbone. Comme activateur, on choisit de préférence, un trialkylaluminium de formule $R_3Al$, dans laquelle R est un radical alkyle substitué ou non, comportant de 1 à 10 atomes de carbone, choisi avantageusement parmi les radicaux éthyle, isobutyle, n-hexyle et n-octyle.

L'activateur organo-métallique est utilisé dans une quantité telle que le rapport du métal qu'il contient (généralement l'aluminium) au métal de transition du catalyseur est compris entre 1 et 100, de préférence entre 2 et 50, avantageusement entre 4 et 20.

Le catalyseur ZIEGLER ou le système catalytique de type ZIEGLER peut être supporté sur un composé minéral tel que $MgCl_2$, MgO, $SiO_2$ ou $Al_2O_3$. On peut citer, à titre d'exemple préféré, l'utilisation d'un catalyseur cobroyé contenant un composé du titane, et éventuellement du vanadium, supporté sur $MgCl_2$.

Les systèmes catalytiques de type métallocènes comprennent le catalyseur métallocène proprement dit associé à un activateur de type aluminoxane.

Le catalyseur métallocène consiste de façon générale en un composé de formule :

$$(Cp)_2\ MY_1Y_2$$

dans laquelle :

- chaque Cp représente indépendamment un noyau cyclopentadiényle éventuellement substitué, les deux noyaux cyclopentadiényle étant à substitution symétrique ou non quand celle-ci existe, une liaison ou pont de covalence pouvant exister entre les deux noyaux Cp ;
- $Y_1$ et $Y_2$ représentent chacun indépendamment un atome d'halogène, tel le chlore, ou un groupe alkyle linéaire ou ramifié en $C_1$-$C_{20}$ ;
- M représente un métal de transition choisi parmi Zr, Hf et Ti, ledit atome étant lié par liaison $\pi$ à chacun des noyaux cyclopentadiényle et par covalence aux deux substituants $Y_1$ et $Y_2$.

Les substituants des noyaux cyclopentadiényle, lorsqu'ils existent, sont choisis notamment parmi les groupes alkyle en $C_1$-$C_{20}$, alcényle en $C_2$-$C_{20}$, aryle et aralkyle. Deux substituants se trouvant dans des positions adjacentes sur un même noyau cyclopentadiényle peuvent être reliés entre eux, formant un cycle, aromatique ou non, condensé sur ledit noyau cyclopentadiényle. Les cycles condensés résultants sont notamment des cycles fluorényle, octahydrofluorényle, indényle, tétrahydroindényle. Lorsque les deux noyaux cyclopentadiényle, substitués ou non comme indiqué ci-dessus, sont pontés, le groupe pontant peut être notamment un groupe alkylène en $C_1$-$C_4$, par exemple un groupe $-CH_2$-$CH_2$-, ou encore un groupe dialkylsilylène tel que diméthylsilylène, ou diarylsilylène tel que diphénylsilylène, ou alkylarylsilylène tel que méthylphénylsilylène.

Comme exemples de catalyseurs métallocènes, non pontés, on peut citer le bis(cyclopentadiényl)zirconium dichlorure ($Cp_2ZrCl_2$), le bis(n-butylcyclopentadiényl) zirconium dichlorure ($(nBuCp)_2ZrCl_2$) et le bis(indényl) zirconium dichlorure ($Ind_2ZrCl_2$).

Comme exemples de catalyseurs métallocènes pontés, on peut citer l'éthylène bis(indényl)zirconium dichlorure ($Et(Ind)_2ZrCl_2$), l'éthylène bis (tétrahydroindényl) zirconium dichlorure ($Et(THInd)_2ZrCl_2$), l'isopropylène (cyclopentadiényl) (fluorényl)zirconium dichlorure ($iPr(Cp)(Flu)ZrCl_2$), et l'isopropylène (tert.-butylcyclopentadiényl)zirconium dichlorure ($iPr(tBuCp)_2ZrCl_2$).

Le catalyseur métallocène peut être supporté ou non. Les supports utilisables sont ceux indiqués ci-dessus avec référence au catalyseur et au système catalytique de type ZIEGLER.

Les catalyseurs métallocènes préférés sont ceux du type ponté et dont les substituants des cycles cyclopentadiényle sont des cycles condensés.

Par ailleurs, le catalyseur métallocène est utilisé conjointement avec un aluminoxane. Les aluminoxanes sont bien connus dans la technique et consistent en des alkyl aluminoxanes oligomères, linéaires et/ou cycliques, représentés par les formules :

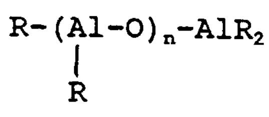 (aluminoxanes oligomères linéaires)

ou

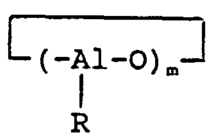 (aluminoxanes oligomères cycliques)

où n est un entier de 1 à 40, m est un entier de 3 à 20, et R est un groupe alkyle en $C_1$-$C_8$ et, de préférence, méthyle.

L'activateur aluminoxane est généralement utilisé dans une quantité telle que le rapport molaire Al de l'aluminoxane / métal de transition du métallocène soit au maximum de 10000 et, de préférence, compris entre 10 et 1000.

La présente invention englobe aussi l'utilisation, comme système catalytique de type ZIEGLER, d'un mélange d'au moins deux systèmes de ce type, et, de la même façon, comme système catalytique de type métallocène, d'un mélange d'au moins deux systèmes de ce type. Elle englobe également l'utilisation de plusieurs systèmes catalytiques de type ZIEGLER et/ou de type métallocène, injectés séparément dans le ou les réacteurs ou dans une ou plusieurs zones réactionnelles.

Conformément à l'invention, le rapport molaire du métal du catalyseur ZIEGLER au métal de transition du catalyseur métallocène est généralement compris entre 0,01 et 100, de préférence entre 0,3 et 30.

De manière connue en soi, la polymérisation de l'éthylène et la (co)polymérisation de l'éthylène avec une alpha-oléfine dans le procédé selon l'invention peuvent être effectuées :

- en présence d'un gaz inerte vis-à-vis des oléfines, tel que l'azote, le propane ou le butane, à raison de jusqu'à 60 % environ en volume par rapport aux monomères ;
- en présence d'au moins un agent de transfert de chaîne tel que l'hydrogène en quantité suffisante, par exemple jusqu'à environ 2 % en moles par rapport aux oléfines, pour moduler la masse moléculaire et l'indice de fluidité du polymère ou copolymère ;
- en introduisant, dans le courant des monomères recyclés n'ayant pas réagi, un désactivateur du système catalytique tel que décrit dans les brevets EP-A-116797, EP-A-116 248 et EP-A-115 233 ;
- de façon continue dans au moins un réacteur, autoclave ou tubulaire, comprenant une ou plusieurs zones réactionnelles fonctionnant à des températures le cas échéant différentes, dans lequel le temps moyen de séjour des monomères est compris entre 1 et 150 secondes, la polymérisation étant effectuée à une température comprise entre 160 et 300°C, sous une pression comprise entre 400 et 3000 bars, le milieu réactionnel étant à l'état hypercritique. Le cas échéant on peut utiliser deux réacteurs fonctionnant en parallèle dans une configuration telle que celle du brevet EP-0 013 229. De préférence, lorsque deux réacteurs sont utilisés, ils sont montés en série.

De manière préférée, lorsqu'un réacteur autoclave comprenant au moins deux zones réactionnelles est utilisé, les monomères sont alimentés en provenance du compresseur à haute pression vers une première zone dont la température est régulée à un niveau inférieur à celui de la (des) zone(s) ultérieure(s).

Conformément à une caractéristique particulière intéressante du procédé selon la présente invention, le système catalytique de type métallocène est injecté dans un réacteur ou une zone réactionnelle en amont et le système catalytique de type ZIEGLER, dans un réacteur ou une zone réactionnelle en aval.

De façon connue, les systèmes catalytiques sont injectés en suspension ou solution selon le cas dans un milieu tel que le méthylcyclohexane, l'isododécane, une coupe d'hydrocarbures saturés en $C_{10}$-$C_{12}$ ou le toluène.

Le procédé selon l'invention peut être avantageusement piloté de telle façon que le débit des systèmes catalytiques soit asservi à la température, fixée à l'avance, des réacteurs ou zones réactionnelles ; plus un catalyseur sera actif à une température donnée, moins les pompes asservies assurant son débit en injecteront dans le réacteur ou la zone réactionnelle, et moins il restera de catalyseur dans le (co)polymère obtenu.

Le mélange gazeux d'alimentation en monomères peut, de façon connue, être injecté en étant réparti entre plusieurs zones réactionnelles, par exemple à raison de 40-90% en volume dans la première zone réactionnelle et de 60-10% en volume dans la deuxième zone réactionnelle.

Le produit sortant du dernier réacteur ou de la dernière zone réactionnelle est décompressé dans une zone de séparation, et le (co)polymère récupéré à la sortie de cette zone est extrudé, puis granulé, de préférence en continu.

Le procédé selon l'invention permet d'obtenir toute une gamme de (co)polymères de l'éthylène, allant des copolymères d'ultra-basse densité (0,860) jusqu'à l'homopolymère de densité voisine de 0,970. En faisant varier les rapports métal du catalyseur ZIEGLER/métal du catalyseur métallocène, la température et la pression de polymérisation, la quantité d'agent de transfert, il est possible d'obtenir notamment des polymères et copolymères de l'éthylène présentant des indices de fluidité (selon la norme ASTM D-1238 condition E) de l'ordre de 1 à 4 g/10 min, les rendant ainsi aptes à la mise en oeuvre par extrusion-soufflage de gaines, avec des rendements catalytiques acceptables (rendements exprimés ci-après en kg de (co)polymère par millimole des métaux du catalyseur ZIEGLER et métallocène).

Les exemples ci-après ont pour but d'illustrer l'invention de façon non limitative.

EXEMPLES 1 A 3 DE L'INVENTION ET 4 A 8 COMPARATIFS

Mode opératoire général

L'installation de polymérisation fonctionne en régime continu et comprend un réacteur vertical autoclave à trois zones. Un séparateur est disposé à la sortie du réacteur et est maintenu sous une pression d'environ 250 bars. Le (co)polymère recueilli au fond du séparateur est introduit dans une trémie de dégazage maintenue sous une pression de 8 bars, puis extrudé et enfin granulé.

Le mélange de monomères (éthylène, butène-1) est introduit en continu à raison de 60% dans la première zone Z1 du réacteur (zone supérieure) et 40% dans la deuxième zone Z2. Dans la première zone Z1, est admis également un système catalytique $Et(THInd)_2ZrCl_2$/MAO (méthylaluminoxane), avec un rapport Al/Zr = 600. Dans la deuxième zone Z2 du réacteur, est injecté un système catalytique ZIEGLER tel que défini dans le Tableau ci-après, l'activateur étant le triéthylaluminium et le rapport Al/Ti ou Al/Ti + V étant de 4 ; et dans la troisième zone du réacteur (zone inférieure), est injecté un désactivateur constitué par environ 1 mole d'eau pour 1 molécule-gramme de Ti + V + Zr + Al.

La température est régulée à la valeur souhaitée dans Z1 et Z2 pendant que la pression est maintenue à 800 ou 1200 bars. Le copolymère recueilli après extrusion et granulation est pesé. Les rendements catalytiques définis dans le Tableau ci-après sont calculés à partir des débits de copolymère, de catalyseurs et de mélanges de monomères introduits dans les zones réactionnelles.

Sur le copolymère obtenu, on a déterminé :

- l'indice de fluidité IF, mesuré selon la norme ASTM D-1238 (condition E) et exprimé en g/10 min.,
- la densité d, mesurée selon la norme ASTM D-1505, et
- la D.M.M., soit le rapport $\overline{Mw}/\overline{Mn}$, ces masses moléculaires étant déterminées par chromatographie par perméation de gel.

Les conditions utilisées et résultats obtenus figurent au Tableau ci-après.

On peut constater que l'association des systèmes catalytiques ZIEGLER et métallocène donne un indice de fluidité IF inférieur à celui attendu (cf. Exemple 1 et Exemples comparatifs 4 et 5-8).

Tableau

| Exemple | Système(s) catalytique(s) | Ti/Zr (rapport molaire) | T(°C) en Z1/Z2 | Rendement (kg/mM (Ti+V+Zr)) | Rendement en Z1 (kg/mM Zr) | Rendement en Z2(kg/mM Ti+V) |
|---|---|---|---|---|---|---|
| 1 (de l'invention) | Et (THInd)$_2$ZrCl$_2$ + MAO / TiCl$_3$, 1/3AlCl$_3$, 12MgCl$_2$* + TEA** | 4 | 180/200 | 8 | 27 | 2,5 |
| 2 (de l'invention) | Et (THInd)$_2$ZrCl$_2$ + MAO / TiCl$_3$, 1/3AlCl$_3$, VCl$_3$* + TEA | 20 | 180/200 | 3,5 | 30 | 0,75 |
| 3 (de l'invention) | Et (THInd)$_2$ZrCl$_2$ + MAO / TiCl$_3$, 1/3AlCl$_3$, 12MgCl$_2$* + TEA | 10 | 180/200 | 8 | 33 | 2,5 |
| 4 (comparatif) | TiCl$_3$, 1/3AlCl$_3$, 12MgCl$_2$* + TEA | - | 200/200 | 6 | - | - |
| 5 (comparatif) | Et (THInd)$_2$ZrCl$_2$ + MAO | - | 180/180 | 50 | - | - |
| 6 (comparatif) | Et (THInd)$_2$ZrCl$_2$ + MAO | - | 180/180 | 75 | - | - |
| 7 (comparatif) | Et (THInd)$_2$ZrCl$_2$ + MAO | - | 180/180 | 70 | - | - |
| 8 (comparatif) | Et (THInd)$_2$ZrCl$_2$ + MAO | - | 180/180 | 65 | - | - |

* Les catalyseurs ZIEGLER mis en oeuvre ont été obtenus par cobroyage comme décrit dans le brevet européen EP-A-032 339

** TEA = triéthylaluminium

Tableau (suite)

| Exemple | P (bars) | % vol. butène-1 dans le gaz d'alimentation | % vol. hydrogène dans le gaz d'alimentation | IF (g/10 min) | d | D.M.M. |
|---|---|---|---|---|---|---|
| 1 (de l'invention) | 800 | 50 | 0,03 | 2,5 | 0,912 | 4,4 |
| 2 (de l'invention) | 800 | 60 | 0,04 | 1 | 0,885 | 6,1 |
| 3 (de l'invention) | 800 | 54 | 0,015 | 5 | 0,904 | 4,5 |
| 4 (comparatif) | 800 | 50 | 0,03 | 10 | 0,901 | 4 |
| 5 (comparatif) | 800 | 54 | 0 | 18 | 0,915 | 2,5 |
| 6 (comparatif) | 800 | 55,5 | 0 | 60 | 0,906 | 2,9 |
| 7 (comparatif) | 1200 | 55,5 | 0 | 12 | 0,909 | 2,8 |
| 8 (comparatif) | 1200 | 58 | 0 | 30 | 0,907 | 2,3 |

## Revendications

1. Procédé continu pour l'homopolymérisation de l'éthylène et la copolymérisation de l'éthylène avec au moins une alpha-oléfine, à une température comprise entre 160 et 300°C, sous une pression comprise entre 400 et 3000 bars, dans au moins un réacteur comprenant au moins une zone réactionnelle dans lequel le temps de séjour des catalyseurs est compris entre 1 et 150 secondes, caractérisé en ce qu'il consiste à introduire simultanément mais séparément dans le réacteur, d'une part, au moins un système catalytique de type ZIEGLER et, d'autre part, au moins un système catalytique de type métallocène/aluminoxane.

2. Procédé selon la revendication 1, caractérisé par le fait que le système catalytique de type métallocène est injecté dans un réacteur ou une zone réactionnelle en amont et le système catalytique de type ZIEGLER, dans un réacteur ou une zone réactionnelle en aval.

3. Procédé selon l'une des revendications 1 et 2, caractérisé par le fait que les alpha-oléfines susceptibles d'être copolymérisées avec l'éthylène sont choisies parmi le propylène, le butène-1, le méthyl-4 pentène-1, l'hexène-1 et l'octène-1.

4. Procédé selon l'une des revendications 1 à 3, caractérisé par le fait qu'on utilise un système catalytique de type ZIEGLER comprenant, d'une part, au moins un composé de métal de transition des groupes IVB, VB, VIB et VIII de la Classification Périodique constituant le catalyseur proprement dit, et, d'autre part, au moins un composé organo-métallique comme activateur, ledit activateur étant utilisé dans une quantité telle que le rapport du métal qu'il contient au métal de transition du catalyseur est compris entre 1 et 100.

5. Procédé selon l'une des revendications 1 à 4, caractérisé par le fait que l'on utilise un système catalytique de type métallocène dont le catalyseur métallocène consiste en un composé de formule :

$$(Cp)_2\ MY_1Y_2$$

dans laquelle :

- chaque Cp représente indépendamment un noyau cyclopentadiényle éventuellement substitué, les deux noyaux cyclopentadiényle étant à substitution symétrique ou non quand celle-ci existe, une liaison ou pont de covalence pouvant exister entre les deux noyaux Cp ;
- $Y_1$ et $Y_2$ représentent chacun indépendamment un atome d'halogène, tel le chlore, ou un groupe alkyle linéaire ou ramifié en $C_1$-$C_{20}$ ;
- M représente un métal de transition choisi parmi Zr, Hf et Ti, ledit atome étant lié par liaison $\pi$ à chacun des noyaux cyclopentadiényle et par covalence aux deux substituants $Y_1$ et $Y_2$.

6. Procédé selon la revendication 5, caractérisé par le fait que les substituants des noyaux cyclopentadiényle, lorsqu'ils existent, sont choisis parmi les groupes alkyle en $C_1$-$C_{20}$, alcényle en $C_2$-$C_{20}$, aryle et aralkyle, deux substituants se trouvant dans des positions adjacentes sur un même noyau cyclopentadiényle pouvant être reliés entre eux, formant un cycle, aromatique ou non, condensé sur ledit noyau cyclopentadiényle, les cycles condensés résultants étant notamment des cycles fluorényle, octahydrofluorényle, indényle, tétrahydroindényle, et que, lorsque les deux noyaux cyclopentadiényle, substitués ou non comme indiqué ci-dessus, sont pontés, le groupe pontant est un groupe alkylène en $C_1$-$C_4$ ou un groupe dialkylsilylène, diarylsilylène ou alkylarylsilylène.

7. Procédé selon l'une des revendications 5 et 6, caractérisé par le fait que l'on utilise un catalyseur métallocène choisi parmi le bis(cyclopentadiényl)zirconium dichlorure, le bis(n-butylcyclopentadiényl) zirconium dichlorure, le bis(indényl) zirconium dichlorure, l'éthylène bis(indényl)zirconium dichlorure, l'éthylène bis(tétrahydroindényl)zirconium dichlorure, l'isopropylène (cyclopentadiényl) (fluorényl)zirconium dichlorure, et l'iso-propylène (tert.-butylcyclopentadiényl)zirconium dichlorure.

8. Procédé selon l'une des revendications 1 à 7, caractérisé par le fait que, dans le système catalytique de type métallocène, l'activateur aluminoxane est utilisé dans une quantité telle que le rapport molaire Al de l'aluminoxane/métal de transition du métallocène soit au maximum de 10000 et, de préférence, compris entre 10 et 1000.

9. Procédé selon l'une des revendications 1 à 8, caractérisé par le fait que le rapport molaire du métal du catalyseur

ZIEGLER au métal de transition du catalyseur métallocène est compris entre 0,01 et 100, de préférence entre 0,3 et 30.

**10.** Procédé selon l'une des revendications 1 à 9, caractérisé par le fait qu'il est piloté de telle façon que le débit des systèmes catalytiques soit asservi à la température, fixée à l'avance, des réacteurs ou zones réactionnelles.

**11.** Procédé selon l'une des revendications 1 à 10, caractérisé par le fait que le mélange gazeux d'alimentation en monomères est injecté en étant réparti entre plusieurs zones réactionnelles, par exemple à raison de 40-90% en volume dans la première zone réactionnelle et de 60-10% en volume dans la deuxième zone réactionnelle.

**12.** Procédé selon l'une des revendications 1 à 11, caractérisé par le fait qu'il est conduit en présence d'au -moins un agent de transfert de chaîne tel que l'hydrogène en quantité suffisante, par exemple jusqu'à environ 2 % en moles par rapport aux oléfines, pour moduler la masse moléculaire et l'indice de fluidité du polymère ou copolymère.

**Claims**

**1.** A continuous process for the homopolymerisation of ethylene and the copolymerisation of ethylene with at least one alpha olefin at a temperature between 160°C and 300°C and a presure between 400 and 3000 bar in at least one reactor comprising at least one reaction zone, in which reactor the residence time of the catalysts is between 1 and 150 seconds, characterised in that the process consists in introducing into the reactor, simultaneously but separately, firstly at least one catalytic system of the Ziegler type and secondly at least one catalytic system of the metallocene/aluminoxane type.

**2.** A process according to claim 1, characterised in that the metallocene-type catalytic system is injected into a reactor or a reaction zone upstream and the Ziegler-type catalytic system is injected into a reactor or reaction zone downstream.

**3.** A process according to one of claims 1 and 2, characterised in that the alpha olefins capable of being copolymerised with ethylene are selected from propene, 1-butene, 4-methyl 1-pentene, 1-hexene and 1-octene.

**4.** A process according to one of claims 1 to 3, characterised in that a Ziegler-type catalytic system is used, comprising, firstly, at least one transition metal compound from the groups IVB, VB, VIB and VIII of the periodic classification, constituting the catalyst itself, and secondly at least one organometallic compound as an activator, the said activator being used in a quantity such that the ratio of the metal that it contains to the transition metal of the catalyst is between 1 and 100.

**5.** A process according to one of claims 1 to 4, characterised in that a metallocene-type catalytic system is used, the metallocene catalyst of which consists of a compound of the formula :

$$(Cp)_2MY_1Y_2$$

wherein :

- each Cp independently represents a substituted or unsubstituted cyclopentadienyl ring, the two cyclopentadienyl rings being symmetrically or unsymmetrically substituted if substitution is present, a covalent bond or bridge being able to exist between the two Cp rings ;
- $Y_1$ and $Y_2$ each independently represent a halogen atom such as chlorine, or a linear or branched $C_1$-$C_{20}$ alkyl group ;
- M represents a transition metal selected from Zr, Hf and Ti, the said atom being linked by a $\pi$ bond to each of the cyclopentadienyl rings and by covalence to the two substituents $Y_1$ and $Y_2$.

**6.** A process according to claim 5, characterised in that the substituents of the cyclopentadienyl rings, when they are present, are selected from the $C_1$-$C_{20}$ alkyl groups, $C_2$-$C_{20}$ alkenyl groups, aryl groups and aralkyl groups, two substituents located in adjacent positions on the same cyclopentadienyl ring being interlinkable, forming an aromatic or non-aromatic cycle condensed onto the said cyclopentadienyl ring, the resulting condensed cycles being in particular fluorenyl, octahydrofluorenyl, indenyl and tetrahydroindenyl cycles, and in that, when the two cyclopentadienyl rings, substituted or not as indicated above, are bridged, the bridging group is a $C_1$-$C_4$ alkylene group or a dialkylsilylene, diarylsilylene or alkylarylsilylene group.

**7.** A process according to one of claims 5 and 6, characterised in that a metallocene catalyst is used, selected from bis (cyclopentadienyl) zirconium dichloride, bis(n-butylcyclopentadienyl)zirconium dichloride, bis(indenyl)zirconium dichloride, ethylene bis(indenyl)zirconium dichloride, ethylene bis(tetrahydroindenyl)zirconium dichloride, isopropylene (cyclopentadienyl) (fluorenyl) zirconium dichloride and isopropylene (tert.-butylcyclopentadienyl)-zirconium dichloride.

**8.** A process according to one of claims 1 to 7, characterised in that, in the metallocene-type catalytic system, the aluminoxane activator is used is a quantity such that the molar ratio between the Al of the aluminoxane and the transition metal of the metallocene is at maximum 10,000 and preferably between 10 and 1000.

**9.** A process according to one of claims 1 to 8, characterised in that the molar ratio of the metal of the Ziegler catalyst to the transition metal of the metallocene catalyst is between 0.01 and 100, preferably between 0.3 and 30.

**10.** A process according to one of claims 1 to 9, characterised in that it is controlled in such a manner that the feed rate of the catalytic systems is determined according to the temperature, fixed in advance, of the reactors or reaction zones.

**11.** A process according to one of claims 1 to 10, characterised in that the gaseous mixture supplying the monomers is injected so as to be distributed between a plurality of reaction zones, for example in a proportion of 40% - 90% by volume in the first reaction zone and 60% - 10% by volume in the second reaction zone.

**12.** A process according to one of claims 1 to 11, characterised in that it is carried out in the presence of at least one chain transfer agent such as hydrogen in a sufficient quantity, for example up to approximately 2% by moles in relation-to the olefins, to modulate the molecular weight and the flow index of the polymer or copolymer.

## Patentansprüche

**1.** Kontinuierliches Verfahren für die Homopolymerisation von Ethylen und die Copolymerisation von Ethylen mit mindestens einem α-Olefin bei einer zwischen 160 und 300°C liegenden Temperatur, unter einem zwischen 400 und 3000 bar liegenden Druck, in mindestens einem Reaktor mit mindestens einer Reaktionszone, worin die Verweilzeit der Katalysatoren zwischen 1 und 150 Sekunden liegt, dadurch gekennzeichnet, daß es darin besteht, zum einen mindestens ein katalytisches System vom ZIEGLER-Typ und zum anderen mindestens ein katalytisches System vom Metallocen/Aluminoxan-Typ gleichzeitig, jedoch getrennt in den Reaktor einzubringen.

**2.** Verfahren nach Anspruch 1, dadurch gekennzeichnet, daß das katalytische System vom Metallocen-Typ in einen in Produktionsrichtung eingangsseitig angeordneten Reaktor bzw. Reaktionszone und das katalytische System vom ZIEGLER-Typ in einen in Produktionsrichtung ausgangsseitig angeordneten Reaktor bzw. Reaktionszone eingespritzt wird.

**3.** Verfahren nach einem der Ansprüche 1 und 2, dadurch gekennzeichnet, daß die mit Ethylen copolymerisierbaren α-Olefine unter Propylen, But-1-en, 4-Methylpent-1-en, Hex-1-en und Oct-1-en ausgewählt sind.

**4.** Verfahren nach einem der Ansprüche 1 bis 3, dadurch gekennzeichnet, daß ein katalytisches System vom ZIEGLER-Typ verwendet wird, welches zum einen mindestens eine den eigentlichen Katalysator darstellende Verbindung von Übergangsmetall der Gruppen IVB, VB, VIB und VIII des Periodensystems und zum anderen mindestens eine metallorganische Verbindung als Aktivator aufweist, wobei der Aktivator in einer solchen Menge eingesetzt wird, daß das Verhältnis des darin enthaltenen Metalls zu dem Übergangsmetall des Katalysators zwischen 1 und 100 beträgt.

**5.** Verfahren nach einem der Ansprüche 1 bis 4, dadurch gekennzeichnet, daß ein katalytisches System vom Metallocen-Typ eingesetzt wird, bei dem der Metallocen-Katalysator aus einer Verbindung mit der Formel:

$$(Cp)_2\ MY_1Y_2$$

besteht, in der:

- jedes Cp unabhängig voneinander für einen gegebenenfalls substituierten Cyclopentadienylkern steht, wobei die beiden Cyclopentadienylkerne eine symmetrische Substitution aufweisen, falls eine solche vorliegt, und wobei zwischen den beiden Cp-Kernen eine kovalente Bindung bzw. Brücke bestehen kann;
- $Y_1$ und $Y_2$ jeweils unabhängig voneinander für ein Halogenatom wie etwa ein Chloratom oder für eine lineare oder verzweigte $C_1$-$C_{20}$-Alkylgruppe stehen;
- M für ein unter Zr, Hf und Ti ausgewähltes Übergangsmetall steht, wobei das Atom mittels $\pi$-Bindung an jeden der Cyclopentadienylkerne und kovalent an die beiden Substituenten $Y_1$ und $Y_2$ gebunden ist.

**6.** Verfahren nach Anspruch 5, dadurch gekennzeichnet, daß die Substituenten der Cyclopentadienylkerne, falls vorhanden, unter $C_1$-$C_{20}$-Alkyl-, $C_2$-$C_{20}$-Alkenyl-, Aryl- und Aralkylgruppen ausgewählt sind, wobei zwei in benachbarten Positionen an einem gleichen Cyclopentadienylkern befindliche Substituenten untereinander gebunden sein können, so daß sie einen aromatischen oder nichtaromatischen Ring bilden, der an den Cyclopentadienylkern kondensiert ist, wobei die resultierenden kondensierten Ringe insbesondere Fluorenyl-, Octahydrofluorenyl-, Indenyl-, Tetrahydroindenylringe sind, und daß, falls die beiden Cyclopentadienylkerne - die gemäß der obenstehenden Angaben substitutiert oder nicht-substitutiert sein können - verbrückt sind, die Brückengruppe eine $C_1$-$C_4$-Alkylengruppe oder eine Dialkylsilylen-, Diarylsilylen- oder Alkylarylsilylengruppe ist.

**7.** Verfahren nach einem der Ansprüche 5 und 6, dadurch gekennzeichnet, daß ein Metallocen-Katalysator verwendet wird, der unter Bis(cyclopentadienyl)zirconiumdichlorid, Bis(n-butylcyclopentadienyl)zirconiumdichlorid, Bis(indenyl)zirconiumdichlorid, Ethylenbis(indenyl)zirconiumdichlorid, Ethylenbis(tetrahydroindenyl)zirconiumdichlorid, Isopropylen(cyclopentadienyl)(fluorenyl)zirconiumdichlorid und Isopropylen(tert-butylcyclopentadienyl)zirconiumdichlorid ausgewählt ist.

**8.** Verfahren nach einem der Ansprüche 1 bis 7, dadurch gekennzeichnet, daß in dem katalytischen System vom Metallocen-Typ der Aluminoxan-Aktivator in einer solchen Menge eingesetzt wird, daß das Al-Molverhältnis von Aluminoxan/Übergangsmetall des Metallocens maximal 10000 und bevorzugt zwischen 10 und 1000 beträgt.

**9.** Verfahren nach einem der Ansprüche 1 bis 8, dadurch gekennzeichnet, daß das Molverhältnis von Metall des ZIEGLER-Katalysators zu Übergangsmetall des Metallocen-Katalysators zwischen 0,01 und 100, bevorzugt zwischen 0,3 und 30 beträgt.

**10.** Verfahren nach einem der Ansprüche 1 bis 9, dadurch gekennzeichnet, daß es derart gesteuert wird, daß der Durchsatz an katalytischen Systemen von der vorausgehend festgelegten Temperatur der Reaktoren bzw. der Reaktionszonen abhängig gemacht wird.

**11.** Verfahren nach einem der Ansprüche 1 bis 10, dadurch gekennzeichnet, daß die zugeführte Monomerengasmischung unter Aufteilung auf mehrere Reaktionszonen eingespritzt wird, beispielsweise in einem Anteil von 40-90% (Vol.) in der ersten Reaktionszone und 60-10% (Vol.) in der zweiten Reaktionszone.

**12.** Verfahren nach einem der Ansprüche 1 bis 11, dadurch gekennzeichnet, daß es in Gegenwart einer ausreichenden Menge von mindestens einem Kettenübertragungsreagens wie etwa Wasserstoff durchgeführt wird, beispielsweise bis ca. 2 Mol-% in Bezug auf die Olefine, um die Molekülmasse und den Fluidätsindex des Polymers bzw. Copolymers zu modulieren.